# EUROPEAN PATENT APPLICATION

(11) **EP 4 460 031 A1**
(43) Date of publication of application: **06.11.2024**
(21) Application number: 22914909.1
(22) Date of filing: 28.12.2022
(51) Int. Cl.: H04N 25/60

(54) **IMAGE PROCESSING METHOD AND APPARATUS, AND ELECTRONIC DEVICE**

(30) Priority: 28.12.2021 CN 202111630141
(71) Applicant: VIVO MOBILE COMMUNICATION CO., LTD., Dongguan, Guangdong 523863 (CN)
(72) Inventor: LI, Gongtan, Dongguan, Guangdong 523863 (CN); DAI, Qibing, Dongguan, Guangdong 523863 (CN); XIONG, Jianqing, Dongguan, Guangdong 523863 (CN)
(74) Representative: Lavoix
(86) International application number: PCT/CN2022/142799
(87) International publication number: WO 2023/125657

(57) **Abstract**

This application discloses an image processing method and apparatus, and an electronic device, and pertains to the technical field of electronic products. The image processing method includes: transmitting first image data to an image enhancement chip based on a main control chip; processing the first image data according to a target working mode based on the image enhancement chip to obtain second image data; and transmitting the second image data to a display screen based on the image enhancement chip; where the image enhancement chip has at least two working modes, one working mode corresponding to one image type, and the target working mode is a working mode corresponding to an image type of the first image data among the at least two working modes.

## Description

### CROSS-REFERENCE TO RELATED APPLICATIONS

This application claims priority to Chinese Patent Application No. 202111630141.8, filed in China on December 28, 2021, which is incorporated herein by reference in its entirety.

### TECHNICAL FIELD

This application relates to the technical field of electronic products, and specifically, to an image processing method and apparatus, and an electronic device.

### BACKGROUND

Currently, the process of displaying an image by an electronic device mainly includes the following steps: obtaining image data, decoding or rendering the image data, and transferring the decoded or rendered image to the display screen for display. In this process, the display effect of the image on the electronic device primarily depends on the quality of the image itself. When the quality of the image is poor, the display effect of the image on the electronic device is correspondingly diminished. For example, if the image has low resolution or contains a significant amount of noise, the image displayed on the electronic device will suffer from low resolution and noise issues. It is evident that existing electronic devices face challenges related to poor image display effect.

### SUMMARY

This application provides an image processing method and apparatus, and an electronic device, which can improve the image display effect of the electronic device.

According to a first aspect, an embodiment of this application provides an image processing method, including:
transmitting first image data to an image enhancement chip based on a main control chip;
processing the first image data according to a target working mode based on the image enhancement chip to obtain second image data; and
transmitting the second image data to a display screen based on the image enhancement chip; where
the image enhancement chip has at least two working modes, one working mode corresponding to one image type, and the target working mode is a working mode corresponding to an image type of the first image data among the at least two working modes.

According to a second aspect, an embodiment of this application provides an image processing circuit including a main control chip, an image enhancement chip, and a display screen, where the main control chip is electrically connected to the image enhancement chip, and the image enhancement chip is electrically connected to the display screen; where
the main control chip is configured to transmit first image data to the image enhancement chip;
the image enhancement chip is configured to process the first image data according to a target working mode to obtain second image data; and
the image enhancement chip is further configured to transmit the second image data to the display screen.

According to a third aspect, an embodiment of this application provides an image processing apparatus, including the image processing circuit according to the foregoing second aspect.

According to a fourth aspect, an embodiment of this application provides an image processing apparatus including:
a transmitting module, configured to transmit first image data to an image enhancement chip based on a main control chip;
a processing module, configured to process the first image data according to a target working mode based on the image enhancement chip to obtain second image data; and
transmitting the second image data to a display screen based on the image enhancement chip; where
the image enhancement chip has at least two working modes, one working mode corresponding to one image type, and the target working mode is a working mode corresponding to an image type of the first image data among the at least two working modes.

According to a fifth aspect, an embodiment of this application provides an electronic device, where the electronic device includes a processor and a memory, where the memory stores a program or instructions capable of running on the processor, and when the program or instructions are executed by the processor, the steps of the method according to the first aspect are implemented.

According to a sixth aspect, an embodiment of this application provides a readable storage medium, where the readable storage medium stores a program or instructions, and when the program or instructions are executed by a processor, the steps according to the foregoing first aspect are implemented.

According to a seventh aspect, an embodiment of this application provides a chip, where the chip includes a processor and a communication interface, the communication interface is coupled to the processor, the processor is configured to run a program or an instruction, and when the program or instructions are executed by the processor, the steps according to the foregoing first aspect are implemented.

According to an eighth aspect, an embodiment of this application provides a computer program product, where the computer program product is stored in a storage medium, and the computer program product is executed by at least one processor so as to implement the method according to the first aspect.

In the embodiments of this application, after the main control chip outputs the first image data, the image enhancement chip further processes the first image data according to the working mode corresponding to the image type of the first image data to obtain the second image data, and then the second image data is displayed. In this way, the image display effect on the electronic device can be improved.

### BRIEF DESCRIPTION OF DRAWINGS

FIG. 1 is a schematic flowchart of an image processing method according to an embodiment of this application;
FIG. 2 is a first schematic structural diagram of an image processing circuit according to an embodiment of this application;
FIG. 3 is a second schematic structural diagram of an image processing circuit according to an embodiment of this application;
FIG. 4 is a third schematic structural diagram of an image processing circuit according to an embodiment of this application;
FIG. 5 is a schematic structural diagram of an image processing apparatus according to an embodiment of this application;
FIG. 6 is a schematic structural diagram of an electronic device according to an embodiment of this application; and
FIG. 7 is a schematic diagram of a hardware structure of an electronic device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this specification and claims of this application are used to distinguish between similar objects rather than to describe a specific order or sequence. It should be understood that data used in this way is used interchangeably in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

The image processing method and apparatus, and the electronic device provided in the embodiments of this application are hereinafter described in detail by using specific embodiments and application scenarios thereof with reference to the accompanying drawings.

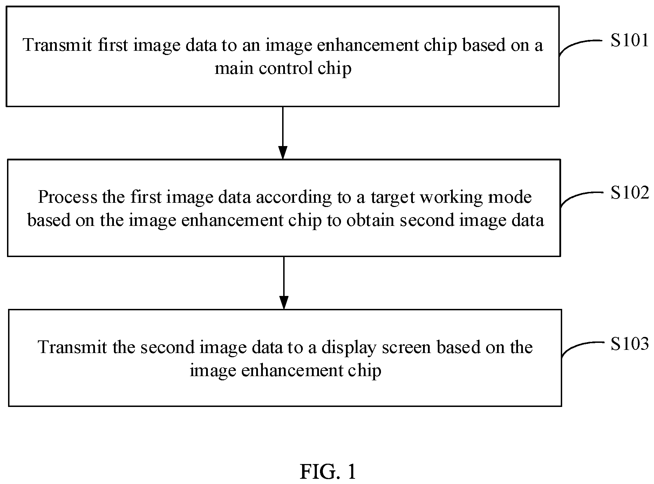

Referring to FIG. 1, FIG. 1 is a flowchart of an image processing method provided in an embodiment of this application. The image processing method includes the following steps:
Step S101: Transmit first image data to an image enhancement chip based on a main control chip.
Step S 102: Process the first image data according to a target working mode based on the image enhancement chip to obtain second image data.
Step S103: Transmit the second image data to a display screen based on the image enhancement chip.

The image enhancement chip has at least two working modes, one working mode corresponding to one image type, and the target working mode is a working mode corresponding to an image type of the first image data among the at least two working modes.

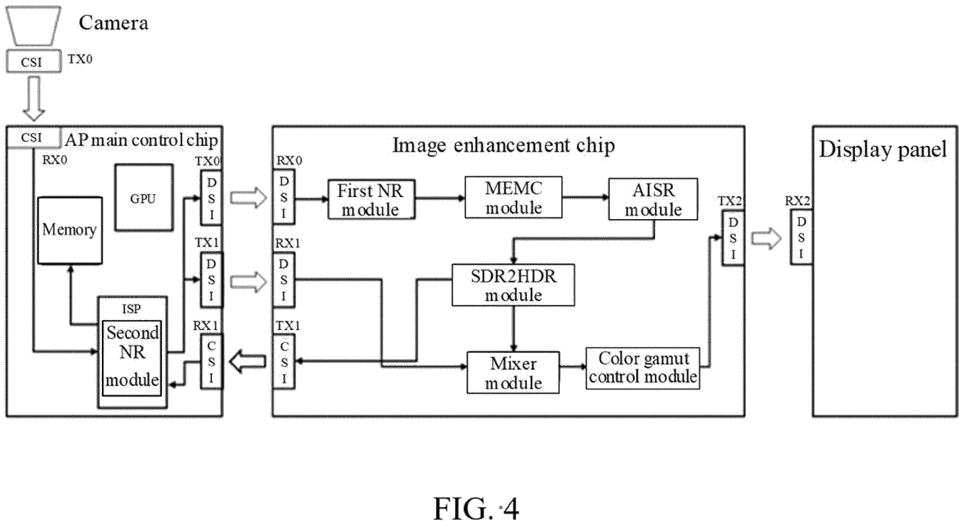

The foregoing main control chip may be an application processor (Application Processor, AP), a system on chip (System on Chip, SOC), or the like. The foregoing image enhancement chip may be an external image enhancement chip independent of the main control chip. The image enhancement chip is electrically connected to the main control chip. For example, the image enhancement chip and the main control chip may be connected through a mobile industry processor interface (Mobile Industry Processor Interface, MIPI). The mobile industry processor interface includes a display serial interface (Display Serial Interface, DSI) and a camera serial interface (Camera Serial Interface, CSI). Referring to FIG. 4, in one embodiment of this application, a first transmitting end (DSI (Transmit X0), DSI (TX0)) of the main control chip is electrically connected to a first receiving end (DSI (Receive X0), DSI (RX0)) of the image enhancement chip. In this way, the main control chip can transmit the first image data to the first receiving end DSI (RXO) of the image enhancement chip based on the first transmitting end DSI (TX0). In addition, a second transmitting end DSI (TX1) of the main control chip can also be electrically connected to a second receiving end DSI (RX1) of the image enhancement chip. In this way, the main control chip can also transmit a user interface (User Interface, UI) to the second receiving end DSI (RX1) of the image enhancement chip through the second transmitting end DSI (TX1). A first receiving end CSI (RX0) of the main control chip can be electrically connected to a first transmitting end CSI (TX0) of a camera to receive images captured by the camera. A second receiving end CSI (RX1) of the main control chip can be electrically connected to a first transmitting end CSI (TX1) of the image enhancement chip to receive the second image data processed by the image enhancement chip. A second transmitting end DSI (TX2) of the image enhancement chip can be electrically connected to a first receiving end DSI (RX2) of the display screen to transmit the processed image to the display screen for display.

The foregoing first image data may be an image rendered by a graphics processing unit (Graphics Processing Unit, GPU) in the main control chip or an image generated through decoding by the GPU in the main control chip.

Specifically, the image type of the first image data may be video image, shooting preview image, recording preview image, game interface image, surveillance video, or the like. Different types of images may have different requirements for the quality of image output. For example, video images typically require high resolution to ensure high clarity of the video, while game interface images typically require a high frame rate to ensure smooth gameplay.

Furthermore, the image type of the first image data also refers to whether the first image data includes specific data, for example, whether the first image data includes a user interface (User Interface, UI). In cases that the first image data includes the user interface and does not include the user interface, two different processing modes are employed for processing the first image data.

In view of this, in an embodiment of this application, at least two different working modes can be pre-configured for the image enhancement chip, and a correspondence between image types and working modes can be established in advance in the image enhancement chip. In this way, when processing the first image data, the image enhancement chip can adopt the corresponding working mode based on the image type of the first image data. This allows for targeted processing of different image types separately, further enhancing the quality of the processed images.

It can be understood that when in different working modes, the image enhancement chip can process images based on its different internal image processing modules.

In addition, before the transmitting first image data to an image enhancement chip based on a main control chip, the method may further include:
obtaining initial image data based on the main control chip, and processing the initial image data based on an image processing module in the main control chip to obtain the first image data. The image processing module may be an image signal processor (Image Signal Processor, ISP) integrated into the main control chip. The initial image data may be images captured by the camera. In this way, after the main control chip obtains the first image data by processing the initial image data, enhancement processing is further performed on the first image data based on the image enhancement chip to obtain the second image data. This can improve the quality of the images output by the camera in the electronic device.

In this implementation, after the main control chip outputs the first image data, the image enhancement chip further processes the first image data according to the working mode corresponding to the image type of the first image data. In this way, the image display effect on the electronic device can be improved.

Optionally, in a case that the image type of the first image data is a first type, the processing the first image data according to a target working mode based on the image enhancement chip to obtain second image data includes:
processing the first image data based on at least one of a first noise reduction (Noise Reduction, NR) module, an artificial intelligence super resolution (Artificial Intelligence Super Resolution, AISR) module, and a standard-dynamic-range to high-dynamic-range (Standard-Dynamic-Range to High-Dynamic-Range, SDR2HDR) conversion module of the image enhancement chip to obtain the second image data.

The foregoing first NR module can be configured to perform noise reduction processing on the first image data to reduce noise in the first image data, especially when the first image data is an image captured at night. Through noise reduction processing performed on the first image data based on the first NR module, the quality of the processed image can be effectively improved. The foregoing AISR module can be configured to enhance the resolution of the first image data, enabling the electronic device to output images with ultra-high resolution. The foregoing SDR2HDR module can be configured to elevate the dynamic range of the first image data to improve the visual experience of users.

The foregoing first type may refer to an image type that demands high image quality, such as images in video play, shooting preview images, or recording preview images. On this basis, in the embodiment of this application, at least one of the following processing can be performed on the first image data:
performing noise reduction processing on the first image data based on the first NR module, increasing the resolution of the first image data based on the AISR module, and improving the dynamic range of the first image data based on the SDR2HDR module. Thus, the quality of the first image data itself can be improved.

In one embodiment of this application, noise reduction processing can be performed on the first image data based on the first NR module, the resolution of the first image data can be enhanced based on the AISR module, and the dynamic range of the first image data can be improved based on the SDR2HDR module, thus improving the quality of the first image data itself.

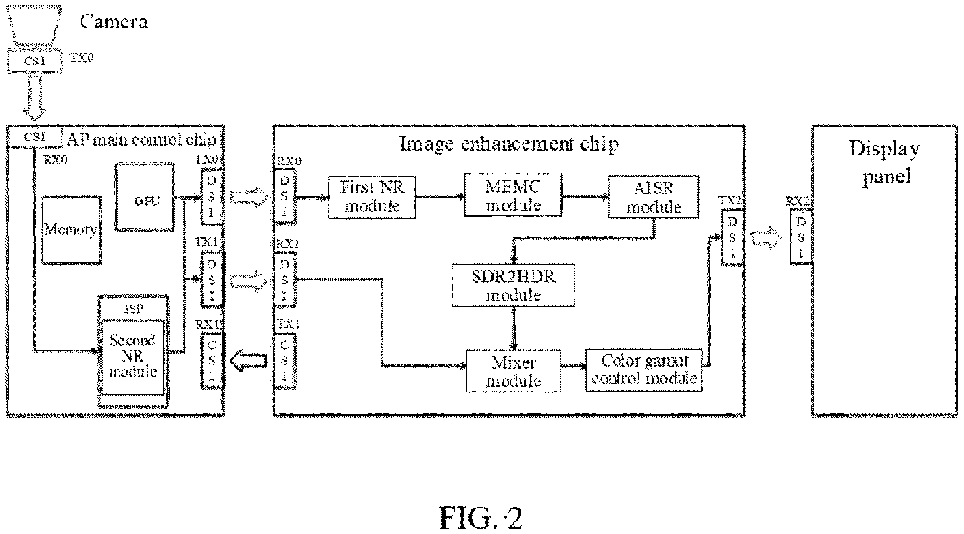

In this embodiment, there is no restriction on the order in which the modules process the first image data. For example, referring to FIG. 2, in one embodiment of this application, the input end of the first NR module is electrically connected to the first receiving end DSI (RX0) of the image enhancement chip; the output end of the first NR module is electrically connected to the input end of the motion estimation and motion compensation (Motion Estimation and Motion Compensation, MEMC) module; the output end of the MEMC module is electrically connected to the input end of the AISR module; and the output end of the AISR module is electrically connected to the input end of the SDR2HDR module. In this way, the first image data received by the first receiving end DSI (RX0) of the image enhancement chip can be sequentially transferred to the first NR module, the MEMC module, the AISR module, and the SDR2HDR module for processing.

When the first image data is transferred to the MEMC module, the MEMC module may not process the first image data and directly transfer the received image to the AISR module, so as to reduce overall power consumption of the electronic device. In addition, the MEMC module may alternatively process the received image. Specifically, the MEMC module may perform frame interpolation processing on the received image to improve the frame rate of the image. In this way, processing such as noise reduction, frame interpolation, and resolution enhancement is performed on the first image data, allowing the electronic device to have functions such as super night scene, super slow-motion, ultra-high resolution, three-dimensional (three-dimensional, 3D) noise reduction, and deblurring.

It can be understood that in one embodiment of this application, before the transmitting first image data to an image enhancement chip based on a main control chip, the method may further include: determining the image type of the first image data based on the main control chip. Correspondingly, the transmitting first image data to an image enhancement chip based on a main control chip may include: transmitting the first image data and the image type of the first image data to the image enhancement chip based on the main control chip. In this way, in a case that the first image data and the image type of the first image data are received, the image enhancement chip can enable the corresponding working mode according to the image type of the first image data to process the first image data. Specifically, the main control chip may determine the image type of the first image data based on a source of the first image data. Certainly, the main control chip may alternatively receive information about the image type of the first image data while receiving the first image data. This is not limited herein.

In this implementation, in a case that the first image data is of the first type, the image enhancement chip processes the first image data according to the working module corresponding to the first type, to further improve the processing effect of the first image data.

Optionally, in a case that the image type of the first image data is a second type, the processing the first image data according to a target working mode based on the image enhancement chip to obtain second image data includes:
processing the first image data based on a motion estimation and motion compensation MEMC module in the image enhancement chip to obtain the second image data.

The foregoing second type may refer to an image type that has high requirements for the image refresh rate or frame rate, such as images in game interfaces or surveillance recording images. Based on this, in the embodiment of this application, frame interpolation processing can be performed on the first image data based on the MEMC module to improve the frame rate of the images.

Furthermore, in another embodiment of this application, the first image data can be processed separately based on the first NR module, the MEMC module, the AISR module, and the SDR2HDR module. This can not only improve the frame rate of the first image data, but also improve the quality of the first image data itself.

In this implementation, in a case that the first image data is of the second type, the image enhancement chip processes the first image data according to the working module corresponding to the second type, to further improve the processing effect of the first image data.

Optionally, before the transmitting the second image data to a display screen based on the image enhancement chip, the method further includes:
processing the second image data based on a color gamut control module in the image enhancement chip to obtain the target image data.

The transmitting the second image data to a display screen based on the image enhancement chip includes:
transmitting the target image data to a display screen based on the image enhancement chip.

Specifically, the image enhancement chip can obtain the color gamut range of the display screen and obtain the color gamut of the second image data. In a case that the color gamut of the second image data is within the color gamut range, the display screen can display the second image data normally, and the color gamut control module can directly determine the second image data as the target image data. Correspondingly, in a case that the color gamut of the second image data exceeds the color gamut range, the display screen cannot display the current color gamut of the second image data normally, and the color gamut control module can compress the color gamut of the second image data to obtain the target image data. The color gamut of the target image data is within the color gamut range, ensuring that the display screen can display the target image data normally.

It can be understood that after the target image data is transmitted to the display screen based on the image enhancement chip, the target image data can be displayed based on the display screen.

In this implementation, the second image data is further processed based on the color gamut control module in the image enhancement chip, ensuring that the color gamut of the image output by the electronic device matches the color gamut range of the display screen. This further enhances the quality of the image output by the electronic device.

Optionally, in a case that the image enhancement chip receives a user interface corresponding to the first image data from the main control chip, the processing the first image data according to a target working mode based on the image enhancement chip to obtain second image data includes:
transferring the user interface to a mixer (Mixer) module in the image enhancement chip based on a first path in the image enhancement chip; and processing the first image data according to the target working mode based on a second path in the image enhancement chip to obtain third image data, and transferring the third image data to the mixer module based on the second path; and
mixing the user interface and the third image data based on the mixer module to obtain the second image data.

Specifically, in some scenarios, when displaying an image, the electronic device may further display a user interface on top of the image, allowing users to perform operations on the displayed content based on the user interface. For example, in a shooting scenario, besides displaying a shooting preview image, the electronic device can also display controls related to shooting. Alternatively, in a gaming scenario, besides displaying the game interface, the electronic device can also display the user interface corresponding to the game interface, allowing the user to perform operations on the game based on related controls in the user interface. Alternatively, when the electronic device is playing video in non-full-screen mode, the non-playback area can display the user interface.

In view of this, referring to FIG. 2, in one embodiment of this application, a mixer module can be provided in the image enhancement chip. The mixer module is configured to mix the third image data processed by the image enhancement chip with the corresponding UI interface.

Specifically, still referring to FIG. 2, the second receiving end DSI (RX1) of the image enhancement chip is electrically connected to the second input end of the mixer module, and the second receiving end DSI (RX1) is connected to the second input end of the mixer module to form the first path. The output end of the SDR2HDR module can be electrically connected to the first input end of the mixer module. The first receiving end DSI (RX0), the first NR module, the MEMC module, the AISR module, the SDR2HDR module, and the first input end of the mixer module are connected sequentially to form the second path. In addition, the output end of the mixer module can also be electrically connected to the input end of the color gamut control module, and the output end of the color gamut control module is connected to the second transmitting end DSI (TX2) of the image enhancement chip.

In one embodiment of this application, in a case that the image to be displayed includes a user interface, the main control chip can transmit the user interface corresponding to the first image data to the image enhancement chip based on the second transmitting end DSI (TX1) while transmitting the first image data to the image enhancement chip based on the first transmitting end DSI (TX0). After the first image data is processed based on the second path, the third image data is obtained, that is, the third image data is obtained after the first image data is processed successively by the first NR module, the MEMC module, the AISR module, and the SDR2HDR module. The SDR2HDR module transfers the third image data to the mixer module. In addition, the user interface can be transferred from the second receiving end DSI (RX1) of the image enhancement chip to the mixer module through the first path. It should be noted that the first path is only used to transfer the user interface received by the image enhancement chip to the mixer module, and during the transfer of the user interface through the first path, no processing is performed on the user interface. After receiving the third image data and the user interface, the mixer module can mix the user interface with the third image data to obtain the second image data. After processed by the color gamut control module, the second image data is transferred to the display screen for display.

It can be understood that when the image to be displayed does not include the corresponding user interface, upon receiving the third image data, the mixer module directly determines the third image data as the second image data and directly transfers the received second image data to the color gamut control module for processing.

In this implementation, with the mixer module provided in the image enhancement chip, the user interface and the second image data processed by the image enhancement chip can be directly mixed in the image enhancement chip, without being transmitted back to the main control chip for mixing. This improves the efficiency of display output.

Optionally, after the processing the first image data according to a target working mode based on the image enhancement chip to obtain second image data, the method further includes:
transmitting the second image data to the main control chip based on the image enhancement chip in a case that the image enhancement chip receives a target instruction, where the target instruction includes at least one of the following instructions: a shooting instruction, a video recording instruction, and a screen capture instruction;
processing the second image data based on the main control chip to obtain fourth image data; and
storing the fourth image data based on a memory in the main control chip.

When users shoot images, record videos, or capture screen content, the images need to be stored in the local memory of the electronic device. The method provided in this application may further include: monitoring whether a target instruction is received based on the main control chip; and in a case that the target instruction is received, transmitting the target instruction to the image enhancement chip based on the main control chip. The image enhancement chip may transmit, in response to the target instruction, the second image data back to the main control chip for storage.

Specifically, the main control chip may use a conventional image processing method to process the second image data to improve the image quality of the second image data. For example, the main control chip may perform noise reduction processing, white balance processing, brightness enhancement processing, color enhancement processing and the like on the second image data. The following further describes the image processing process of the main control chip by using an example in which the main control chip performs noise reduction processing on the second image data.

Referring to FIG. 4, the output end of the SDR2HDR module may be electrically connected to the first transmitting end CSI (TX1) of the image enhancement chip. In addition, the input end of the second noise reduction module is electrically connected to the second receiving end CSI (RX1) of the main control chip, and the output end of the main control chip is electrically connected to the input end of the memory. In this way, in a case that the image enhancement chip receives the target instruction, the second image data output by the SDR2HDR module can be transferred to the second noise reduction module through the first transmitting end CSI (TX1). The main control chip can further perform noise reduction processing on the second image data based on the second noise reduction module to obtain the fourth image data, and store the fourth image data in the memory.

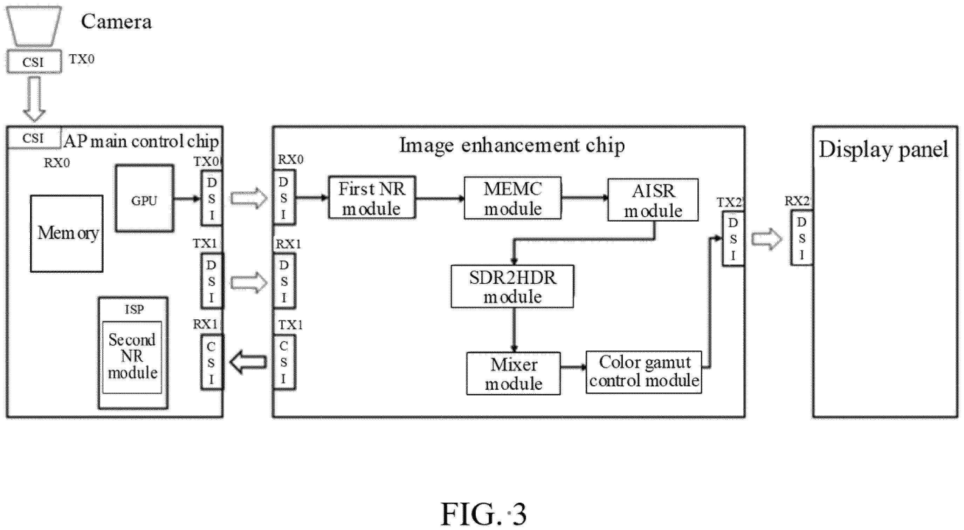

It can be understood that as shown in FIG. 4, in a case that the image enhancement chip receives the target instruction, the image enhancement chip, on one hand, transmits the second image data back to the main control chip based on the SDR2HDR module for storage; and on the other hand, transfers the second image data to the mixer module based on the SDR2HDR module for display output of the second image data. Correspondingly, referring to FIG. 3, in a case that the image enhancement chip receives no target instruction, the image enhancement chip only transfers the second image data to the mixer module based on the SDR2HDR module for display output of the second image data, without transmitting the second image data back to the main control chip.

In this embodiment, the target instruction of the user is transferred to the image enhancement chip. Thus, upon receiving the target instruction, the image enhancement chip can transmit the processed image back to the main control chip for storage. Since the stored image is an image processed by the image enhancement chip, the quality of the stored image can be improved.

Referring to FIGs. 2 to 4, an embodiment of this application further provides an image processing circuit. The image processing circuit includes a main control chip, an image enhancement chip, and a display screen, where the main control chip is electrically connected to the image enhancement chip, and the image enhancement chip is electrically connected to the display screen; where
the main control chip is configured to transmit first image data to the image enhancement chip;
the image enhancement chip is configured to process the first image data according to a target working mode to obtain second image data; and
the image enhancement chip is further configured to transmit the second image data to the display screen.

Optionally, the image enhancement chip includes a first noise reduction module, an artificial intelligence super resolution AISR module, and a standard-dynamic-range to high-dynamic-range SDR2HDR conversion module which are electrically connected sequentially; where
the image enhancement chip is configured to, in a case that an image type of the first image data is a first type, process the first image data based on at least one of the first noise reduction module, the artificial intelligence super resolution AISR module, and the standard-dynamic-range to high-dynamic-range SDR2HDR conversion module of the image enhancement chip to obtain the second image data.

Optionally, the image enhancement chip further includes a motion estimation and motion compensation MEMC module, and the first noise reduction module is electrically connected to the artificial intelligence super resolution AISR module through the motion estimation and motion compensation MEMC module; and
the image enhancement chip is configured to, in a case that the image type of the first image data is a second type, process the first image data based on the motion estimation and motion compensation MEMC module to obtain the second image data.

Optionally, the image enhancement chip further includes a first receiving end, a second receiving end, and a mixer module, where the first receiving end is connected to an input end of the first noise reduction module, an output end of the standard-dynamic-range to high-dynamic-range SDR2HDR conversion module is connected to a first input end of the mixer module, and the second receiving end is connected to a second input end of the mixer module; where
the first receiving end is configured to receive the first image data transmitted by the main control chip, and the second receiving end is configured to receive a user interface transmitted by the main control chip;
the image enhancement chip is further configured to process the first image data based on at least one of the first noise reduction module, the artificial intelligence super resolution AISR module, and the standard-dynamic-range to high-dynamic-range SDR2HDR conversion module to obtain the third image data; and
the image enhancement chip is further configured to mix the user interface and the third image data based on the mixer module to obtain the second image data.

Optionally, the image enhancement chip further includes a color gamut control module, and an output end of the mixer module is electrically connected to the display screen through the color gamut control module; where
the color gamut control module is configured to, in a case of receiving the second image data transmitted by the mixer module, perform color gamut adjustment on the second image data to obtain target image data; and
the color gamut control module is further configured to transmit the target image data to the display screen.

The image processing circuit provided in this embodiment can implement the processes in the foregoing method embodiment, with the same technical effects achieved. To avoid repetition, details are not described herein again.

Another embodiment of this application further provides an image processing apparatus including the image processing circuit described in the foregoing embodiment.

The image processing apparatus provided in this embodiment includes the foregoing image processing circuit, so it can implement the processes of the foregoing image processing method, with the same technical effects achieved. To avoid repetition, details are not described herein again.

The image processing method provided in the embodiments of this application can be executed by an image processing apparatus. In this embodiment of this application, the image processing method being executed by the image processing apparatus is used as an example to describe the image processing method apparatus provided in this embodiment of this application.

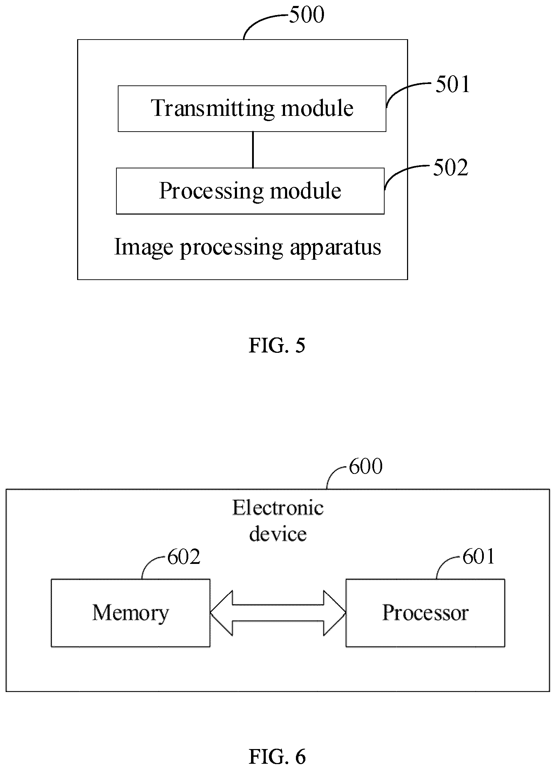

Referring to FIG. 5, which is a schematic structural diagram of an image processing apparatus 500 according to an embodiment of this application. The image processing apparatus 500 includes:
a transmitting module 501, configured to transmit first image data to an image enhancement chip based on a main control chip;
a processing module 502, configured to process the first image data according to a target working mode based on the image enhancement chip to obtain second image data; and
transmit the second image data to a display screen based on the image enhancement chip; where
the image enhancement chip has at least two working modes, one working mode corresponding to one image type, and the target working mode is a working mode corresponding to an image type of the first image data among the at least two working modes.

Optionally, the processing module 502 is specifically configured to process the first image data based on at least one of a first noise reduction module, an artificial intelligence super resolution AISR module, and a standard-dynamic-range to high-dynamic-range SDR2HDR conversion module of the image enhancement chip to obtain the second image data.

Optionally, the processing module 502 is specifically configured to process the first image data based on a motion estimation and motion compensation MEMC module in the image enhancement chip to obtain the second image data.

Optionally, the processing module 502 includes:
a transmission submodule, configured to transfer a user interface to a mixer module in the image enhancement chip based on a first path in the image enhancement chip; and process the first image data according to the target working mode based on a second path in the image enhancement chip to obtain third image data, and transfer the third image data to the mixer module based on the second path; and
a mixing submodule, configured to mix the user interface and the third image data based on the mixer module to obtain the second image data.

Optionally, the transmitting module 501 is further configured to transmit the second image data to the main control chip based on the image enhancement chip in a case that the image enhancement chip receives a target instruction, where the target instruction includes at least one of the following instructions: a shooting instruction, a video recording instruction, and a screen capture instruction.

The processing module 502 is further configured to process the second image data based on the second noise reduction module of the main control chip to obtain fourth image data.

The apparatus further includes:
a storage module, configured to store the fourth image data based on a memory in the main control chip.

In this implementation, after the main control chip outputs the first image data, the image enhancement chip further processes the first image data according to the working mode corresponding to the image type of the first image data. This can improve the image processing effect of the electronic device.

The image processing apparatus 500 in the embodiments of this application may be an electronic device or a component in the electronic device, for example, an integrated circuit or a chip. The electronic device may be a terminal or a device other than terminals. For example, the electronic device may be a mobile phone, a tablet computer, a notebook computer, a palmtop computer, an in-vehicle electronic device, a mobile Internet device (Mobile Internet Device, MID), an augmented reality (Augmented Reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like; it may also be a server, a network attached storage (Network Attached Storage, NAS), a personal computer (personal computer, PC), a television (television, TV), a teller machine, a self-service machine, or the like. This is not specifically limited in the embodiments of this application.

The image processing apparatus 500 in the embodiment of this application may be an apparatus having an operating system. The operating system may be an android (Android) operating system, an iOS operating system, or another possible operating system. This is not specifically limited in the embodiments of this application.

The image processing apparatus 500 provided in the embodiment of this application can implement the processes implemented in the method embodiment in FIG. 1. To avoid repetition, details are not described herein again.

Optionally, as shown in FIG. 6, an embodiment of this application further provides an electronic device 600 including a processor 601, a memory 602, and a program or instructions stored in the memory 602 and executable on the processor 601. When the program or instructions are executed by the processor 601, the processes in the foregoing image processing method embodiment are implemented, with the same technical effects achieved. To avoid repetition, details are not described herein again.

It should be noted that the electronic device in the embodiment of this application includes the foregoing mobile electronic device and non-mobile electronic device.

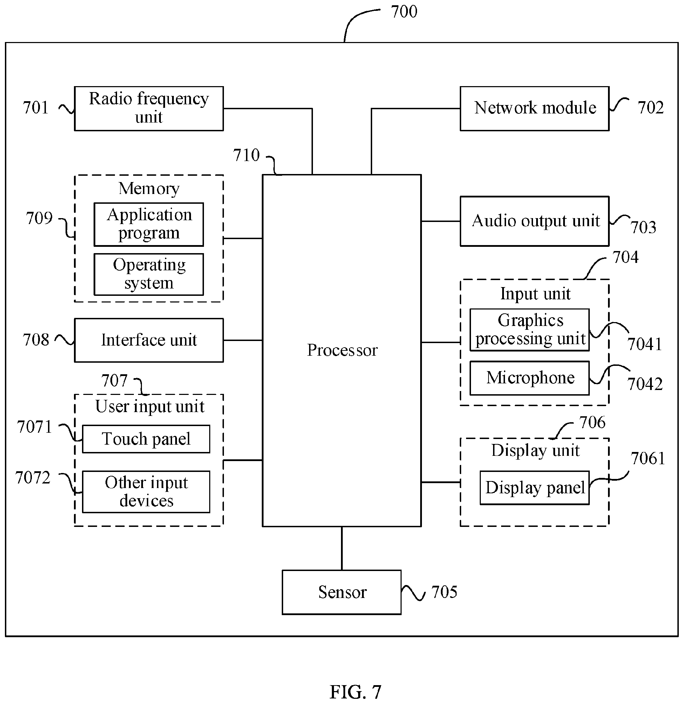

FIG. 7 is a schematic diagram of a hardware structure of an electronic device according to an embodiment of this application.

The electronic device 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

The processor 710 is configured to transmit first image data to an image enhancement chip based on a main control chip;

The processor 710 is further configured to process the first image data according to a target working mode based on the image enhancement chip to obtain second image data; and

The processor 710 is further configured to transmit the second image data to a display screen based on the image enhancement chip; where
the image enhancement chip has at least two working modes, one working mode corresponding to one image type, and the target working mode is a working mode corresponding to an image type of the first image data among the at least two working modes.

Optionally, the processor 710 is further configured to process the first image data based on at least one of a first noise reduction module, an artificial intelligence super resolution AISR module, and a standard-dynamic-range to high-dynamic-range SDR2HDR conversion module of the image enhancement chip to obtain the second image data.

Optionally, the processor 710 is further configured to process the first image data based on a motion estimation and motion compensation MEMC module in the image enhancement chip to obtain the second image data.

Optionally, the processor 710 is further configured to transfer a user interface to a mixer module in the image enhancement chip based on a first path in the image enhancement chip; and process the first image data according to the target working mode based on a second path in the image enhancement chip to obtain third image data, and transfer the third image data to the mixer module based on the second path.

The processor 710 is further configured to mix the user interface and the third image data based on the mixer module to obtain the second image data.

Optionally, the processor 710 is further configured to transmit the second image data to the main control chip based on the image enhancement chip in a case that the image enhancement chip receives a target instruction, where the target instruction includes at least one of the following instructions: a shooting instruction, a video recording instruction, and a screen capture instruction.

The processor 710 is further configured to process the second image data based on the main control chip to obtain fourth image data.

The processor 710 is configured to store the fourth image data based on a memory in the main control chip.

Those skilled in the art can understand that the electronic device 700 may further include a power supply (for example, a battery) that supplies power to various components. The power supply may be logically connected to the processor 710 through a power management system, so that functions such as charge and discharge management and power consumption management are implemented by using the power management system. The structure of the electronic device shown in FIG. 7 does not constitute a limitation on the electronic device. The electronic device may include more or fewer components than shown in the figure, or combine some components, or have different arrangements of the components. Details are not described herein again.

It should be understood that in this embodiment of this application, the input unit 704 may include a graphics processing unit (Graphics Processing Unit, GPU) 7041 and a microphone 7042. The graphics processing unit 7041 processes image data of still pictures or videos that are obtained by an image capture apparatus (for example, a camera) in an image or video capture mode. The display unit 706 may include a display panel 7061. The display panel 7061 may be configured in a form of a liquid crystal display, an organic light-emitting diode display, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (for example, a volume control button or on/off button), a trackball, a mouse, and a joystick. Details are not described herein again.

The memory 709 may be configured to store a software program and various data. The memory 709 may include a first storage area for storing programs or instructions and a second storage area for storing data. The first storage area may store an operating system, an application program or instructions required by at least one function (for example, a sound play function or an image play function), and the like. In addition, the memory 709 may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in the embodiments of this application includes but is not limited to these and any other suitable types of memories.

The processor 710 may include one or more processing units. Optionally, the processor 710 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated into the processor 710.

An embodiment of this application further provides a readable storage medium having a program or instructions stored thereon. When the program or instructions are executed by the processor, the processes in the foregoing image processing method embodiment are implemented, with the same technical effects achieved. To avoid repetition, details are not described herein again.

The processor is the processor in the electronic device in the foregoing embodiments. The readable storage medium includes a computer-readable storage medium such as a computer read-only memory ROM, a random access memory RAM, a magnetic disk, or an optical disc.

An embodiment of this application further provides a chip including a processor and a communication interface. The communication interface is coupled with the processor, and the processor is configured to execute the program or instructions to implement the processes in the foregoing image processing method embodiment, with the same technical effects achieved. To avoid repetition, details are not described herein again.

It should be understood that the chip mentioned in an embodiment of this application may also be referred to as a system-level chip, a system chip, a chip system, a system-on-chip, or the like.

An embodiment of this application provides a computer program product, where the program product is stored in a storage medium, and when being executed by at least one processor, the program product implements the processes of the foregoing image processing method embodiments, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the method and apparatus in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other forms without departing from the principle of this application and the protection scope of the claims, and all such forms fall within the protection scope of this application.

## Claims

1. An image processing method, comprising:
transmitting first image data to an image enhancement chip based on a main control chip;
processing the first image data according to a target working mode based on the image enhancement chip to obtain second image data; and
transmitting the second image data to a display screen based on the image enhancement chip; wherein
the image enhancement chip has at least two working modes, one working mode corresponding to one image type, and the target working mode is a working mode corresponding to an image type of the first image data among the at least two working modes.

2. The method according to claim 1, wherein in a case that the image type of the first image data is a first type, the processing the first image data according to a target working mode based on the image enhancement chip to obtain second image data comprises:
processing the first image data based on at least one of a first noise reduction module, an artificial intelligence super resolution AISR module, and a standard-dynamic-range to high-dynamic-range SDR2HDR conversion module of the image enhancement chip to obtain the second image data.

3. The method according to claim 1, wherein in a case that the image type of the first image data is a second type, the processing the first image data according to a target working mode based on the image enhancement chip to obtain second image data comprises:
processing the first image data based on a motion estimation and motion compensation MEMC module in the image enhancement chip to obtain the second image data.

4. The method according to claim 1, wherein in a case that the image enhancement chip receives a user interface corresponding to the first image data from the main control chip, the processing the first image data according to a target working mode based on the image enhancement chip to obtain second image data comprises:
transferring the user interface to a mixer module in the image enhancement chip based on a first path in the image enhancement chip; and processing the first image data according to the target working mode based on a second path in the image enhancement chip to obtain third image data, and transferring the third image data to the mixer module based on the second path; and
mixing the user interface and the third image data based on the mixer module to obtain the second image data.

5. The method according to claim 1, wherein after the processing the first image data according to a target working mode based on the image enhancement chip to obtain second image data, the method further comprises:
transmitting the second image data to the main control chip based on the image enhancement chip in a case that the image enhancement chip receives a target instruction, wherein the target instruction comprises at least one of the following instructions: a shooting instruction, a video recording instruction, and a screen capture instruction;
processing the second image data based on the main control chip to obtain fourth image data; and
storing the fourth image data based on a memory in the main control chip.

6. An image processing circuit, comprising a main control chip, an image enhancement chip, and a display screen, wherein the main control chip is electrically connected to the image enhancement chip, and the image enhancement chip is electrically connected to the display screen; wherein
the main control chip is configured to transmit first image data to the image enhancement chip;
the image enhancement chip is configured to process the first image data according to a target working mode to obtain second image data; and
the image enhancement chip is further configured to transmit the second image data to the display screen.

7. The circuit according to claim 6, wherein the image enhancement chip comprises a first noise reduction module, an artificial intelligence super resolution AISR module, and a standard-dynamic-range to high-dynamic-range SDR2HDR conversion module which are electrically connected sequentially; wherein
the image enhancement chip is configured to, in a case that an image type of the first image data is a first type, process the first image data based on at least one of the first noise reduction module, the artificial intelligence super resolution AISR module, and the standard-dynamic-range to high-dynamic-range SDR2HDR conversion module of the image enhancement chip to obtain the second image data.

8. The circuit according to claim 7, wherein the image enhancement chip further comprises a motion estimation and motion compensation MEMC module, and the first noise reduction module is electrically connected to the artificial intelligence super resolution AISR module through the motion estimation and motion compensation MEMC module; and
the image enhancement chip is configured to, in a case that the image type of the first image data is a second type, process the first image data based on the motion estimation and motion compensation MEMC module to obtain the second image data.

9. The circuit according to claim 8, wherein the image enhancement chip further comprises a first receiving end, a second receiving end, and a mixer module, wherein the first receiving end is connected to an input end of the first noise reduction module, an output end of the standard-dynamic-range to high-dynamic-range SDR2HDR conversion module is connected to a first input end of the mixer module, and the second receiving end is connected to a second input end of the mixer module; wherein
the first receiving end is configured to receive the first image data transmitted by the main control chip, and the second receiving end is configured to receive a user interface transmitted by the main control chip;
the image enhancement chip is further configured to process the first image data based on at least one of the first noise reduction module, the artificial intelligence super resolution AISR module, and the standard-dynamic-range to high-dynamic-range SDR2HDR conversion module to obtain the third image data; and
the image enhancement chip is further configured to mix the user interface and the third image data based on the mixer module to obtain the second image data.

10. The circuit according to claim 8, wherein the image enhancement chip further comprises a color gamut control module, and an output end of the mixer module is electrically connected to the display screen through the color gamut control module; wherein
the color gamut control module is configured to, in a case of receiving the second image data transmitted by the mixer module, perform color gamut adjustment on the second image data to obtain target image data; and
the color gamut control module is further configured to transmit the target image data to the display screen.

11. An image processing apparatus, comprising the image processing circuit according to any one of claims 6 to 10.

12. An image processing apparatus, comprising:
a transmitting module, configured to transmit first image data to an image enhancement chip based on a main control chip;
a processing module, configured to process the first image data according to a target working mode based on the image enhancement chip to obtain second image data; and
transmit the second image data to a display screen based on the image enhancement chip; where
the image enhancement chip has at least two working modes, one working mode corresponding to one image type, and the target working mode is a working mode corresponding to an image type of the first image data among the at least two working modes.

13. An electronic device, comprising a processor and a memory, wherein the memory stores a program or instructions capable of running on the processor, wherein when the program or instructions are executed by the processor, the steps of the image processing method according to any one of claims 1 to 5 are implemented.

14. A readable storage medium, wherein the readable storage medium stores a program or instructions, and when the program or instructions are executed by a processor, the steps of the image processing method according to any one of claims 1 to 5 are implemented.

15. A chip, wherein the chip comprises a processor and a communication interface, wherein the communication interface is coupled to the processor, and the processor is configured to run a program or instructions to implement the steps of the image processing method according to any one of claims 1 to 5.

16. A computer program product, wherein the computer program product is stored in a storage medium, and the computer program product is executed by at least one processor so as to implement the steps of the image processing method according to any one of claims 1 to 5.

17. An electronic device, configured to perform the steps of the image processing method according to any one of claims 1 to 5.
